# EUROPÄISCHE PATENTSCHRIFT

(11) **EP 2 162 242 B1**
(45) Veröffentlichungstag und Bekanntmachung des Hinweises auf die Patenterteilung: **14.09.2011**
(21) Anmeldenummer: 08773449.7
(22) Anmeldetag: 16.06.2008
(51) Int. Cl.: B08B 7/00, C09J 189/06, C11D 3/384, C11D 11/00

(54) **VERFAHREN ZUR REINIGUNG VON FLÄCHEN ODER GEGENSTÄNDEN AUF DER BASIS EINES GELATINE-KLEBSTOFFES**
METHOD FOR CLEANING SURFACES OR ITEMS BASED ON A GELATIN ADHESIVE
PROCÉDÉ DE NETTOYAGE DE SURFACES OU D'OBJETS SUR LA BASE D'UNE MATIÈRE ADHÉSIVE EN GÉLATINE

(30) Priorität: 16.06.2007 DE 102007027743
(43) Veröffentlichungstag der Anmeldung: 17.03.2010
(73) Patentinhaber: Winterscheidt, Klaus, 22941 Bargteheide (DE)
(72) Erfinder: Winterscheidt, Klaus, 22941 Bargteheide (DE)
(74) Vertreter: Patentanwälte Ruff, Wilhelm, Beier, Dauster & Partner
(86) Internationale Anmeldenummer: PCT/EP2008/004813
(87) Internationale Veröffentlichungsnummer: WO 2008/155078

(56) Entgegenhaltungen:
- WO-A-01/54836
- WO-A-2006/040043
- DE-A1- 3 940 604
- DE-A1- 10 029 775
- DE-A1- 10 261 786
- US-A- 5 505 787

## Beschreibung

Die Erfindung betrifft ein Verfahren zur Reinigung von Flächen oder Gegenständen auf der Basis eines Gelatine-Klebstoffes, eine Auftragsvorrichtung, enthaltend den Klebstoff, ein Reinigungs-Set sowie die Verwendung des Klebstoffes zu Reinigungszwecken.

In vielen Bereichen kommen unterschiedliche Materialien wie Kunst- und Natursteinen oder Metallen zum Einsatz, um beispielsweise Treppen, Fenster, Bänke, Bodenbeläge, Fassaden jeglicher Art oder Putze an Hauswänden herzustellen. Daneben werden derartige Materialien häufig auch in der Bildhauerei, beispielsweise zur Herstellung von Skulpturen und Plastiken, verwendet. Bei fast allen Materialien bzw. Gegenständen kommt es mit der Zeit zur unerwünschten Ablagerung von Schmutzpartikeln, welche eine regelmäßige Säuberung erforderlich machen. Durch Witterungseinflüsse können die Verunreinigungen noch verstärkt werden. Darüber hinaus ist bei Flächen in der Regel nach einer gewissen Zeit ein Abrieb festzustellen, der das Aussehen der Flächen unansehnlich macht. Auch in diesem Fall ist daher häufig eine Säuberung notwendig.

Derzeit stehen verschiedene Möglichkeiten zur Verfügung, um Flächen bzw. Gegenstände von Verunreinigungen zu befreien. Eine konventionelle Methode besteht darin, Verschmutzungen bzw. Verunreinigungen mittels einer Reinigungsflüssigkeit aufzuweichen und anschließend mechanisch, beispielsweise durch Bürsten oder Scheuern, zu entfernen. Nachteilig hierbei ist jedoch, dass der Reinigungsvorgang einen relativ hohen Kraftaufwand erfordert. Außerdem bleiben Verunreinigungen häufig in Kapillaren, Rissen oder unebenen, rauen Untergründen haften, weswegen sich die Verunreinigungen nicht immer vollständig entfernen lassen. Im Falle von Fliesen, welche mit Fugen verbunden sind, ist es zudem nicht immer möglich, gleichzeitig eine Reinigung sowohl der Fliesen als auch der Fugen zu erzielen. Ein weiterer Nachteil besteht darin, dass abhängig vom verwendeten Reinigungszusatz und den entfernten Verunreinigungen das entstandene Schmutzwasser eine Belastung für die Umwelt darstellt.

Eine andere Reinigungsmethode betrifft die Hochdruckreinigung mittels Wasser und gegebenenfalls Reinigungszusätzen. Problematisch bei dieser Methode ist, dass sie wegen des Spritzwassers nicht oder nur mit erheblichem Aufwand für die Reinigung von Innenräumen genutzt werden kann. Darüber hinaus bedeutet der hohe Druck eine erhebliche mechanische Belastung für die zu reinigenden Flächen bzw. Gegenstände, wodurch grundsätzlich die Gefahr besteht, dass die zu reinigenden Flächen bzw. Gegenstände beschädigt werden können. Die Hochdruckreinigung kann außerdem nur mit entsprechenden elektrischen Gerätschaften durchgeführt werden, weswegen das Verfahren insgesamt energie-und kostenintensiv ist. Im Übrigen kann auch das im Rahmen der Hochdruckreinigung anfallende Schmutzwasser unter Umweltgesichtspunkten zu Problemen führen.

Eine weitere Reinigung sieht den Einsatz von Dampfreinigungsgeräten vor. Auch in diesem Fall ist die Reinigungswirkung in vielen Fällen nicht befriedigend und der Einsatz beispielsweise im Innenbereich nicht unproblematisch. Darüber hinaus stehen bei dieser Methode Energieverbrauch und Reinigungswirkung in keiner wirtschaftlichen Relation.

Ein relativ neues Verfahren ist die Trockeneisreinigung, durch welche grundsätzlich alle Verunreinigungen entfernt werden können, die auf starke Temperaturunterschiede reagieren. Das Verfahren kommt wegen der hohen Kosten jedoch nur in wenigen Bereichen zum Einsatz. Außerdem besteht ein gewisses Risiko, dass zu reinigende Flächen bzw. Gegenstände aufgrund der starken Temperaturdifferenzen beschädigt werden. Insgesamt ist die Anwendung der Trockeneisreinigung, insbesondere im häuslichen Bereich, daher nur wenig geeignet.

Ein an sich leistungsstarkes Reinigungsverfahren unter Verwendung von polyvinylacetathaltigen Dispersionen ist aus der WO 2006/040043 A1 bekannt. Bei dem dort beschriebenen Verfahren werden im Laufe des Reinigungsvorganges Polyvinylacetat-Dispersionen auf zu reinigende Flächen bzw. Gegenstände aufgetragen, welche anschließend zusammen mit den Verunreinigungen abgezogen werden können. Das Verfahren liefert im Hinblick auf viele Materialien befriedigende Reinigungsergebnisse. Je nach Material und Beschaffenheit der zu reinigenden Flächen bzw. Gegenstände kann jedoch die Reißfestigkeit der sich ausbildenden polyvinylacetathaltigen Filme nicht ausreichend hoch sein, um diese anschließend durch ein einfaches Abziehen zusammen mit den Verschmutzungen entfernen zu können. In diesen Fällen ist die Auftragung einer sogenannten Deckschicht auf die polyvinylacetathaltigen Filme erforderlich, um einen Verbund herzustellen, der die für das Abziehen notwendige Festigkeit aufweist. Durch diesen zusätzlichen Verfahrensschritt wird das Verfahren jedoch insgesamt aufwändiger und auch kostenintensiver.

Aus der US 5,505,787 geht ein Reinigungsverfahren für Verschmutzungen auf Außenwänden von Gebäuden hervor, wobei zur Entfernung der Verschmutzungen eine wässrige Reinigungsflüssigkeit, welche unter anderem Gelatine aufweisen kann, verwendet wird.

Die WO 01/54836 A1 betrifft ein Reinigungsverfahren für harte Oberflächen, bei welchem in einem ersten Schritt die zu reinigenden Oberflächen mit einer festen Beschichtung überzogen werden, welche in einem zweiten Schritt durch Kontakt mit einer Flüssigkeit gelöst und/oder dispergiert wird.

Gegenstand der DE 102 61 786 A1 ist ein schmelzbarer Klebstoff auf Gelatinebasis zur Zwischenlagenverklebung von Massenware, welcher ein wasserlösliches Polymer umfasst, welches dem Klebstoff fadenziehende Eigenschaften verleiht.

Die DE 100 29 775 A1 offenbart ein Verfahren zum Aufbringen von Klebstoff auf der Basis von thermisch schmelzbarer Gelatine auf ein Substrat, wobei es sich bei dem Substrat um Pappe, Papier, Holz oder Schaumkunststoff handeln kann.

Die vorliegende Erfindung stellt sich daher die Aufgabe, ein Verfahren zur Reinigung von Flächen oder Gegenständen bereitzustellen, welches die aus dem Stand der Technik bekannten Nachteile nicht aufweist. Das erfindungsgemäße Verfahren soll möglichst vielseitig anwendbar, umweltverträglich, kostengünstig und mit möglichst geringem Aufwand durchführbar sein. Darüber hinaus sollen Verschmutzungen möglichst rückstandsfrei von den zu reinigenden Flächen bzw. Gegenständen entfernt werden können, ohne dass es zu mechanischen oder chemischen Beschädigungen der Flächen bzw. Gegenstände kommt.

Diese Aufgabe wird erfindungsgemäß gelöst durch ein Verfahren zur Reinigung von Flächen oder Gegenständen, umfassend die folgenden Schritte:
- a.: Auftragen eines Klebstoffes, umfassend Gelatine und/oder zumindest ein Gelatinederivat und zumindest ein Lösungs- mittel, auf eine zu reinigende Fläche bzw. einen zu reini- genden Gegenstand,
- b.: Trocknen des aufgetragenen Klebstoffes unter Ausbildung eines Klebstofffilmes,
- c.: Entfernen des Klebstofffilmes zusammen mit daran anhaf- tenden Verunreinigungen von der Fläche bzw. dem Ge- genstand.

Überraschenderweise konnte festgestellt werden, dass sich Klebstoffe auf der Basis von Gelatine zu Reinigungszwecken, insbesondere zur Reinigung von Flächen oder Gegenständen, einsetzen lassen. So sind zwar Klebstoffe auf Gelatinebasis an sich bereits aus dem Stand der Technik bekannt. Beispielsweise werden derartige Klebstoffe in der DE 42 25 465 A1 und der EP 1 462 499 A1 beschrieben. Ihre Eignung zu Reinigungszwecken ist bisher jedoch nicht beschrieben worden.

Durch das erfindungsgemäße Verfahren lassen sich Verschmutzungen bzw. Verunreinigungen jeglicher Art im Wesentlichen rückstandsfrei von zu reinigenden Flächen bzw. Gegenständen entfernen. Das Verfahren beruht dabei auf den vorteilhaften Klebeeigenschaften des erfindungsgemäß einsetzbaren Gelatine-Klebers. Dieser ist bei Normaltemperatur gewöhnlich im Wesentlichen fest bzw. gel- oder gallertartig ausgebildet. Wird der Klebstoff jedoch oberhalb seiner Erstarrungstemperatur erwärmt, wird der Klebstoff flüssig. Nach dem Auftragen beginnt der Klebstoff zu gelieren und bindet wegen der polymeren Gelatinestruktur physikalisch ab. Während des Abbindens, d.h. während des Übergangs vom flüssigen in den gel- oder gallertartigen Zustand, entwickelt der Klebstoff schnell eine hohe Klebekraft, wodurch feste Verbindungen zu Verschmutzungen ausgebildet werden können. Ein Teil des im Klebstoff enthaltenen Lösungsmittels kann außerdem während des Trocknungs- bzw. Verdunstungsvorganges in die Verunreinigungen eindringen und diese zumindest zum Teil anlösen. Gleichzeitig wird der Gelatineanteil im Klebstoff durch die fortschreitende Trocknung aufkonzentriert, wodurch die physikalischen Bindungskräfte zwischen den Gelatinemolekülen und den Verunreinigungen bzw. Verschmutzungen weiter erhöht werden. Schließlich erreicht der Klebstoff eine elastische Festigkeit, welche sich in der Ausbildung eines Films bzw. Belages auf den zu reinigenden Flächen bzw. Gegenständen manifestiert. Die im Verlaufe des Trocknungsvorganges an dem Klebstoff haftengebliebenen Verunreinigungen können dann zusammen mit diesem als Film bzw. Belag entfernt werden. Besonders vorteilhaft ist, dass die Entfernung von Verunreinigungen und Klebstoff in der Regel lediglich einen einzigen Arbeitsschritt erfordert.

Unter Verunreinigungen im Sinne der vorliegenden Erfindung sollen Verschmutzungen jeglicher Art verstanden werden, insbesondere Staubpartikel, Erde, Schlamm, Sand, Reinigungsmittelrückstände, organische Verschmutzungen, technische Verschmutzungen und biologische Verschmutzungen. Im Hinblick auf Reinigungsmittelrtickstände ist besonders hervorzuheben, dass mit Hilfe des erfindungsgemäßen Verfahrens insbesondere Kalkseife entfernt werden kann, die sich beispielsweise mit Polyvinylacetat-Dispersionen nicht entfernen lässt. Bei den organischen Verschmutzungen kann es sich beispielsweise um Lebensmittelreste, Essensreste, tote Insekten und/oder Exkremente, insbesondere Kot und/oder Urin, handeln. Bei den technischen Verschmutzungen sind beispielsweise Abriebe, insbesondere Gummiabriebe, besonders zu erwähnen. Typische biologische Verschmutzungen werden beispielsweise durch Flechten, Moose, Schimmel oder Bakterien verursacht.

In einer bevorzugten Ausführungsform wird der Klebstoff flächig, insbesondere vollflächig, auf die zu reinigende Fläche bzw. den zu reinigenden Gegenstand aufgetragen. Erfindungsgemäß kann der Klebstoff schichtförmig aufgetragen werden. Bevorzugt ist, dass der Klebstoff in Form einer Einzelschicht auf die zu reinigende Fläche bzw. den zu reinigenden Gegenstand aufgetragen wird. Die Auftragung mehrerer Schichten, insbesondere einer Deckschicht, wie in der WO 2006/040043 A1 beschrieben, ist damit nicht erforderlich. Dies macht das Verfahren in besonderer Weise einfach und spart zudem Material sowie Zeit ein.

Wie bereits erwähnt, verfügt der erfindungsgemäß einsetzbare Klebstoff in flüssigem Zustand eine ausreichend hohe Klebekraft, um Verunreinigungen binden und damit von Flächen bzw. Gegenständen entfernen zu können. Der Klebestoff wird vor, bei oder nach dem Auftragen geschmolzen.

Der Klebstoff wird gemäß einer weiteren Ausführungsform in erwärmtem Zustand, insbesondere bei einer Temperatur zwischen 35°C und 70°C, vorzugsweise 45°C und 60°C, aufgetragen werden. Dies kann beispielsweise mit Hilfe von Warmleimwalzen oder Warmleimrollern bewerkstelligt werden. Eine Erwärmung oberhalb von 70 °C sollte, wenn möglich, vermieden werden, da sich mit den in diesem Fall entstehenden Gelatineabbauprodukten, insbesondere Glutose, in der Regel keine befriedigende Reinigungsergebnisse mehr erzielen lassen

Der Klebstoff wird in einer weiteren Ausführungsform in einer Dicke zwischen 0,3 mm und 0,8 mm, insbesondere 0,3 mm und 0,6 mm, vorzugsweise 0,4 mm und 0,5 mm, auf die zu reinigende Fläche bzw. den zu reinigenden Gegenstand aufgetragen. In der Regel sind diese Auftragsdicken für die Entstehung eines möglichst reißfesten und damit eines im Wesentlichen rückstandsfrei entfernbaren Klebstoffes ausreichend.

Grundsätzlich kann das Auftragen des Klebstoffes durch Aufspritzen, Aufdüsen, Aufstreichen, Aufwalzen, Aufrollen oder Aufsprühen auf die zu reinigende Fläche bzw. den zu reinigenden Gegenstand vorgenommen werden. Je nach Fläche bzw. Gegenstand kann das Auftragen des Klebstoffes unter Verwendung von Pinseln, Rollern, Walzen, Heißklebepistole, Leimpistole oder Düsen, insbesondere Loch- oder Schlitzdüsen, vorzugsweise Breitschlitzdüsen, erfolgen. Bevorzugt wird der Klebstoff mit Hilfe von Düsenspritzverfahren oder Düsensprühverfahren aufgetragen. Düsenspritzverfahren kommen vor allem dann zur Anwendung, wenn der Klebstoff in Unebenheiten oder Vertiefungen, beispielsweise Fugen oder Rissen, gepresst werden soll. Erfolgt das Auftragen des Klebstoffes durch Aufsprühen, kann der Klebstoff als Aerosol aufgetragen werden.

Als Lösungsmittel für den Klebstoff werden bevorzugt leicht flüchtige Lösungsmittel, insbesondere Lösungsmittel mit einem Siedepunkt ≤ 100°C, verwendet. So können als Lösungsmittel Wasser, Methanol, Ethanol, Propanol und/oder Isopropanol, verwendet werden. Die Verwendung von Wasser ist besonders bevorzugt, da von diesem Lösungsmittel keinerlei Gesundheitsgefährdung für das Reinigungspersonal ausgeht. Zudem erfordert der Umgang mit Wasser keinerlei Sicherheitsvorkehrungen, welche durch das Reinigungspersonal zu beachten sind. So entfällt beispielsweise das Tragen einer Schutzkleidung, insbesondere von Schutzhandschuhen und/oder einer Schutzbrille. Des Weiteren ist das erfindungsgemäße Verfahren in dieser Ausführungsform in besonderer Weise für die Reinigung von Innenräumen geeignet. Daneben können auch Lösungsmittelgemische, insbesondere Gemische aus Wasser und niederen Alkoholen, beispielsweise Ethanol und/oder Isopropanol, verwendet werden.

In einer weitergehenden Ausführungsform wird der Klebstoff als Leim auf die zu reinigende Fläche bzw. den zu reinigenden Gegenstand aufgetragen.

In einer weiteren Ausführungsform wird der aufgetragene Klebstoff während eines Zeitraumes zwischen 1 und 8 Stunden, insbesondere 1 und 6 Stunden, vorzugsweise von ca. 2 Stunden, getrocknet, ehe der ausgebildete Klebstofffilm von der zu reinigenden Fläche bzw. dem zu reinigenden Gegenstand entfernt wird. In der Regel erfolgt das Trocknen des aufgetragenen Klebstoffes durch zumindest teilweises Verdunsten des zumindest einen Lösungsmittels. Die Zeit, welche zum Trocknen des Klebstoffes erforderlich ist, hängt insbesondere von der Umgebungstemperatur, der Luftfeuchtigkeit, der Wasseraufnahmefähigkeit der zu reinigenden Fläche bzw. des zu reinigenden Gegenstandes sowie der Auftragsdicke, ab. So lässt sich der im Laufe der Trocknung des Klebstoffes entstehende Klebstofffilm bei einer Umgebungstemperatur ab 15°C und einer Luftfeuchtigkeit zwischen 40 und 60% bereits nach 2 Stunden unter Erzielung eines optimalen Reinigungsergebnisses entfernen. Dabei ist es durch die Wahl der Trocknungsdauer möglich, den während der Trocknung entstehenden Klebstofffilm hinsichtlich seiner Flexibilität bzw. Festigkeit an die Gegebenheiten der zu reinigenden Flächen bzw. Gegenstände anzupassen. So kann es ein harter Untergrund, der starke Verschmutzungen und tiefe Kapillaren, Risse oder Spalten aufweist, erforderlich machen, den Film länger aushärten zu lassen, bevor er zusammen mit den Verunreinigungen entfernt wird. Dagegen kann ein Film, welcher noch relativ weich und insbesondere flexibel ausgebildet ist, im Falle eines empfindlichen Untergrunds, welcher weniger Verschmutzungen aufweist, nach seiner Entfernung ein gutes Reinigungsergebnis erzielen.

Für bestimmte Reinigungszwecke kann es von Vorteil sein, wenn die Trocknung von außen unterstützt bzw. beschleunigt wird. Dies kann beispielsweise dadurch geschehen, dass die mit dem Klebstoff versehenen, insbesondere bedeckten, Flächen bzw. Gegenstände mit Heizstrahlern, beispielsweise Infrarot-Strahlern, erwärmt werden. Im Falle einer zu reinigenden Bodenfläche kann beispielsweise eine vorhandene Fußbodenheizung den Trocknungsvorgang verkürzen. Entsprechendes gilt auch für Wandheizungen. Bei zu reinigenden transportablen Objekten, wie beispielsweise Plastiken und Skulpturen, können stationäre Hochfrequenzstrahler zum Einsatz kommen. Des Weiteren ist es grundsätzlich auch möglich, auf die noch nicht getrockneten, mit dem Klebstoff versehenen Flächen bzw. Gegenstände, ein technisches Papier oder ein technisches Gewebe, beispielsweise ein Vlies oder Gaze aufzulegen. Auf diese Weise kann der Trocknungsvorgang ebenfalls beschleunigt werden, weil dem im Klebstoff vorhandenen zumindest einen Lösungsmittel zusätzliche Verdunstungsflächen angeboten wird. Zudem erleichtert die Verwendung eines technischen Papiers bzw. Gewebes die Entfernung des getrockneten Klebstofffilmes.

In einer besonders bevorzugten Ausführungsform wird der Klebstofffilm zusammen mit den daran anhaftenden Verunreinigungen durch einfaches Abziehen von der zu reinigenden Fläche bzw. dem zu reinigenden Gegenstand entfernt. Gegebenenfalls noch auf den gereinigten Flächen bzw. Gegenständen verbliebene Filmreste können ohne Weiteres mittels Wasser, insbesondere warmem Wasser, beseitigt werden. Der entfernte Klebstofffilm ist mit besonderem Vorteil zusammen mit den daran anhaftenden Verschmutzungen biologisch abbaubar und kann beispielsweise im Hausmüll entsorgt oder kompostiert werden. Alternativ kann der Klebstoff auch recycelt werden. Das Recyceln bzw. die Wiedergewinnung kann beispielsweise durch Auflösen des Klebstoffes in Wasser, Abfiltern des Schmutzes und Eindicken der erhaltenen Klebstofflösung bis zur gewünschten Viskosität erfolgen.

Das erfindungsgemäße Verfahren eignet sich allgemein zur Reinigung von gewerblichen Flächen bzw. Gebäuden und Privathaushalten. Darüber hinaus kann das Verfahren für restauratorische Zwecke eingesetzt werden. Außerdem eignet sich das Verfahren mit besonderem Vorteil zur Desinfektion von Flächen und/oder Gegenständen. So kann das Verfahren im medizinischen Bereich, beispielsweise zur Reinigung von Arzt- und/oder Tierarztpraxen, Anwendung finden. Die zu reinigenden Flächen bzw. Gegenstände können aus den verschiedensten Materialien, insbesondere Baumaterialien, bestehen. So kann es sich bei den zu reinigenden Flächen bzw. Gegenständen um Natursteine, insbesondere Granit, Porphyr, Basalt, Marmor, Sandstein, Buntsandstein, Kalkstein, Muschelkalk, Schiefer und/oder Grauwacke handeln. Weiterhin kann es sich bei den zu reinigenden Flächen bzw. Gegenständen auch um Erzeugnisse aus gebranntem Ton, mit oder ohne Glasurüberzug, handeln. Beispielsweise kann das erfindungsgemäße Verfahren zur Reinigung von Ziegelei-Erzeugnissen, insbesondere von Mauerziegel, Deckenziegel, Dachziegel, Klinker, Drainrohre und/oder Terrakotten, verwendet werden. Ebenfalls möglich ist die Reinigung von Flächen bzw. Gegenständen aus Metall, Stahl, Zement, Keramik und/oder Porzellan.

Darüber hinaus eignet sich das erfindungsgemäße Verfahren auch zur Reinigung von kratzempfindlichen Oberflächen, beispielsweise aus Plexiglas. Der Vorteil liegt darin, dass derartige Oberflächen mit Hilfe des Verfahrens ohne Beschädigungen gereinigt werden können. Ein weiteres Anwendungsgebiet des Verfahrens betrifft die Entfernung von organischen Verschmutzungen, beispielsweise toten Insekten oder Vogelkot, von Autolacken.

Ein weiteres mögliches Anwendungsgebiet des Verfahrens betrifft die Reinigung von Start- und Landebahnen von Flughäfen. Bei den hierbei anfallenden Verunreinigungen handelt es sich hauptsächlich um Abriebe, welche die Start- bzw. Landebahnen glatt machen können.

Bevorzugt wird das Verfahren zur Reinigung von waagrecht angeordneten Flächen, insbesondere von Estrichen und/oder Böden, beispielsweise Laminat- und/oder Parkettböden, verwendet. Besonders bevorzugt handelt es sich bei den zu reinigenden Flächen um Böden aus Fliesenund Fugenmaterialien. Bei den Fliesen kann es sich um offen- oder geschlossenporige keramische Fliesen handeln. Die Fliesenfugen können insbesondere auf Mineralien oder Kunstharzen basieren.

Weiterhin können mit Hilfe des erfindungsgemäßen Verfahrens auch senkrechte Flächen, insbesondere Wände und/oder Mauern, oder Gebäudefassaden, beispielsweise aus Klinker oder Ziegelsteinen, gereinigt werden. Ein weiteres Anwendungsgebiet des erfindungsgemäßen Verfahrens betrifft die Reinigung von mineralischen Putzen und Kunstharzputzen im Innen- und Außenbereich sowie Gegenständen, insbesondere aus Baukeramiken und/oder Metallen. Hierbei spielt es keine Rolle, ob diese Gegenstände lackiert sind oder nicht. Bevorzugt wird das Verfahren zur Reinigung von Kunstgegenständen, insbesondere Skulpturen und/oder Plastiken, verwendet.

Weitere Merkmale und Eigenschaften des erfindungsgemäß verwendbaren Klebstoffes werden im Folgenden noch näher beschrieben.

Die vorliegende Erfindung betrifft weiterhin auch die Verwendung eines Klebstoffes, umfassend Gelatine und/oder zumindest ein Gelatinederivat und zumindest ein Lösungsmittel, zu Reinigungszwecken, insbesondere zur Reinigung von Flächen und/oder Gegenständen. Bezüglich der Verwendung des Klebstoffes zu bestimmten Reinigungszwecken wird vollständig auf die bisherige Beschreibung Bezug genommen. Bevorzugt ist der Klebstoff für einen direkten Auftrag auf eine zu reinigende Fläche bzw. einen zu reinigenden Gegenstand vorgesehen. Besonders bevorzugt wird der Klebstoff direkt auf eine zu reinigende Fläche bzw. einen zu reinigenden Gegenstand aufgetragen.

Der erfindungsgemäß verwendbare Klebstoff ist ein schmelzbarer Klebstoff. Dies bedeutet, dass der Klebstoff bei Normaltemperaturen in der Regel im Wesentlichen fest ist, insbesondere als Gallerte oder Gel, vorliegt. Wird der Klebstoff oberhalb seines Erstarrungspunktes erwärmt, verflüssigt sich der Klebstoff. In diesem Zustand kann der Klebstoff abbinden bzw. aushärten und seine gewünschte Klebewirkung gegenüber Verunreinigungen bzw. Verschmutzungen entfalten. Mit besonderem Vorteil ist der Klebstoff in geschmolzenem Zustand sprühfähig. Erfindungsgemäß kann der Klebstoff als Warmleim, insbesondere als Knochen-, Knorpel-, Haut- oder Hasenleim vorliegen.

In einer bevorzugten Ausführungsform weist der Klebstoff einen Erstarrungspunkt unterhalb von 70°C, insbesondere unterhalb von 50°C, besonders bevorzugt unterhalb von 45°C, auf. Der Erstarrungspunkt bzw. die Erstarrungstemperatur des Klebstoffs kann beispielsweise durch den Gehalt an Gelatine, Wasser oder auch Salzen, insbesondere Bittersalz, beeinflusst werden. Es ist vom jeweiligen Anwendungsbereich abhängig, in welchem Temperaturbereich der Erstarrungspunkt bevorzugter Weise liegt. Wenn der Erstarrungspunkt relativ niedrig liegt, kann bei niedrigeren Temperaturen während des Verklebungsprozesses gearbeitet werden, als wenn der Erstarrungspunkt bei einer höheren Temperatur liegt. Darüber hinaus ist der Klebstoff vorzugsweise in einem Temperaturbereich zwischen 30 und 80°C, insbesondere 50 und 70°C, schmelzbar.

Der Klebstoff weist in einer weiteren Ausführungsform eine Abbindezeit bzw. Aushärtungszeit zwischen 1 und 6 Stunden, insbesondere 2 und 4 Stunden, auf. Des Weiteren kann der Klebstoff im geschmolzenen Zustand eine Viskosität zwischen 1000 und 50000 mPas, insbesondere 1000 und 15000 mPas, insbesondere 3000 und 8000 mPas, bevorzugt 3500 und 5500 mPas, besonders bevorzugt 4000 und 5500 mPas, aufweisen.

Der Klebstoff weist vorzugsweise einen Anteil an der Gelatine und/oder dem zumindest einen Gelatinederivat zwischen 10 Gew.-% und 80 Gew.-%, insbesondere 10 Gew.-% und 60 Gew.-%, bevorzugt 25 Gew.-% und 40 Gew.-%, auf, bezogen auf das Gesamtgewicht des Klebstoffes.

Bei der Gelatine kann es sich um technische Gelatine oder um Lebensmittelgelatine handeln. Die Gelatine kann synthetisch oder aus tierischen Rohstoffen, beispielsweise. Knochen, Knorpel oder Haut, hergestellt sein. Beispielsweise kann die Gelatine aus Pferd, Rind, Schaf, Schwein oder Hasen stammen. Im Falle von Gelatine handelt es sich, wie allgemein bekannt, um das Denaturierungsprodukt von Collagen. Bevorzugt leitet sich die Gelatine bzw. das Gelatinederivat von Collagen des Typs I, II und/oder III ab. Als mögliche Gelatinederivate kommt hauptsächlich acylierte Gelatine in Frage. Acylierte Gelatine besitzt gegenüber nicht acylierter Gelatine den Vorteil, dass sie in höheren Konzentrationen in Wasser löslich ist. Auf diese Weise kann ein Klebstoff auf Gelatinebasis hergestellt werden, der während des Trocknungsvorganges noch stärker abbindet und eine noch höhere Klebekraft entwickelt. Dadurch lassen sich beispielsweise auch schwer zugängliche Verunreinigungen leichter binden und letztendlich auch leichter entfernen. Das zumindest eine Gelatinederivat ist bevorzugt aus der Gruppe acetylierte Gelatine, succinylierte Gelatine und Phthaloyl-Gelatine ausgewählt.

Neben Gelatine bzw. dem zumindest einen Gelatinederivat kann der Klebstoff auch noch weitere Proteinbestandteile aufweisen, insbesondere Kollagen.

In einer weiteren Ausführungsform weist der Klebstoff einen Anteil an Wasser zwischen 10 Gew.-% und 60 Gew.-%, insbesondere 30 Gew.-% und 40 Gew.-%, auf, bezogen auf das Gesamtgewicht des Klebstoffes. So ist unter anderem der Wassergehalt im Klebstoff dafür verantwortlich, bei welcher Temperatur der Klebstoff vom flüssigen Zustand in den festen bzw. gelartigen Zustand übergeht. Mit einem niedrigeren Wassergehalt lässt sich diese Übergangstemperatur daher herabsetzen, was bei bestimmten Anwendungen auf wärmeempfindlichen Oberflächen vorteilhaft sein kann.

Bevorzugt weist der Klebstoff ferner ein wasserlösliches Polymer auf. Der Klebstoff weist vorzugsweise einen Anteil eines wasserlöslichen Polymers zwischen 0,1 Gew.-% und 20 Gew.-%, insbesondere 5 Gew.-% und 15 Gew.-%, bezogen auf das Gesamtgewicht des Klebstoffes, auf. Besonders bevorzugt handelt es sich bei dem wasserlöslichen Polymer um ein Polymer, welches dem Klebstoff fadenziehende Eigenschaften verleiht. Dadurch ist es insbesondere möglich, den Klebstoff in dünnen Fäden beispielsweise auf Fugen oder in Risse, Spalten oder andere Vertiefungen bzw. Unebenheiten der zu reinigenden Flächen bzw. Gegenstände aufzutragen.

Bei dem wasserlöslichen Polymer kann es sich insbesondere um Polyethylenglykol und/oder Polyvinylalkohol handeln. Ganz besonders bevorzugt ist hierbei Polyethylenglykol (PEG). Das Polyethylenglykol hat hierbei vorteilhafterweise eine Molmasse von zumindest 1000 g/mol, insbesondere zumindest 8000 g/mol, vorzugsweise zumindest 25.000 g/mol. Es hat sich herausgestellt, dass die fadenziehenden Eigenschaften des Klebstoffes durch Verwendung eines Polyethylenglykols hoher Molmasse erhöht werden können, so dass insbesondere Polyethylenglykole mit hohen Molmassen bevorzugt sind. Entsprechendes gilt für Polyvinylalkohole. Die Molmasse der einsetzbaren Polyvinylalkohole beträgt dabei in einer bevorzugten Ausführungsform zumindest 1000 g/mol, vorzugsweise zumindest 5000 g/mol. Besonders bevorzugt ist zumindest 6000 g/mol. Auch hier können Polyvinylalkohole mit einer höheren Molmasse bevorzugt sein, da hierdurch die fadenziehenden Eigenschaften des Klebstoffes im Allgemeinen noch gesteigert werden können.

In einer weiteren Ausführungsform weist der Klebstoff zusätzliche Bestandteile auf. Diese können aus der Gruppe Weichmacher, Salze, Desinfektionsmittel, antimikrobielle Verbindungen, Bleichmittel, Farbstoff, Pigmente, Konservierungsmittel, Entschäumer, Duftstoffe, Säuren, Kunststofffasern und Naturfasern ausgewählt sein. Als Weichmacher kommen grundsätzlich alle dem Fachmann geläufigen Weichmacher in Frage. Bevorzugt sind Glycerin und/oder Diethylenglykol. Der Weichmacher kann dabei einen Anteil im Klebstoff zwischen 0 Gew.-% und 40 Gew.-%, insbesondere 5 Gew.-% und 20 Gew.-%, aufweisen, bezogen auf das Gesamtgewicht des Klebstoffes. Beispielsweise kann bei einem relativ geringen Wassergehalt des Klebstoffs ein höherer Anteil des Weichmachers vorgesehen sein, während bei einem Klebstoff mit einem relativ hohen Wassergehalt die zugegebene Menge an Weichmacher geringer ausfallen kann.

Erfindungsgemäß kann der Klebstoff einen Anteil an Salzen zwischen 0 Gew.-% und 20 Gew.-%, insbesondere 5 Gew.-% und 15 Gew.-%, bezogen auf das Gesamtgewicht des Klebstoffes, aufweisen. Ganz besonders bevorzugt sind Sulfate. Beispielsweise können Magnesiumsulfat und/oder Natriumsulfat verwendet werden. Durch den Zusatz von Sulfaten, beispielsweise Magnesiumsulfat, auch als Bittersalz bekannt, kann der Erstarrungspunkt des Klebstoffes erhöht werden. In diesen Fällen kann der Gelatinegehalt niedriger eingestellt werden. Dies kann aus Kostengründen interessant sein, da Bittersalz kostengünstiger als Gelatine ist.

Weiterhin kann der Klebstoff einen Anteil an Desinfektions- und/oder Bleichmittel zwischen 0 Gew.-% und 1 Gew.-%, insbesondere 0,01 Gew.-% und 0,5 Gew.-%, bezogen auf das Gesamtgewicht des Klebstoffes, aufweisen. Als Desinfektions- bzw. Bleichmittel kommen beispielsweise Wasserstoffperoxid und/oder Chlordioxid in Betracht.

Wie bereits erwähnt, kann der Klebstoff weiterhin auch Farbstoffe oder Pigmente, insbesondere Weißmacher, beispielsweise Titandioxid, aufweisen. Sind Farbstoffe bzw. Pigmente im Klebstoff vorhanden, so weisen diese in der Regel einen Anteil zwischen 0 Gew.-% und 5 Gew.-%, insbesondere 0,1 Gew.-% und 3 Gew.-%, bezogen auf das Gesamtgewicht des Klebstoffes, auf. Konservierungsmittel können im Klebstoff in einem Anteil zwischen 0 Gew.-% und 1 Gew.-%, insbesondere 0,1 Gew.-% und 0,6 Gew.-%, bezogen auf das Gesamtgewicht des Klebstoffes, enthalten sein. Darüber hinaus kann es vorteilhaft sein, wenn der Klebstoff einen Anteil an einem Entschäumer zwischen 0 Gew.-% und 1 Gew.-%, insbesondere 0,1 Gew.-% und 0,7 Gew.-%, bezogen auf das Gesamtgewicht des Klebstoffes, aufweist. Darüber hinaus können auch 0 Gew.-% bis 1 Gew.-%, insbesondere 0,01 Gew.-% bis 0,5 Gew.-%, Parfümierungsmittel bzw. Duftstoffe im Klebstoff enthalten sein.

Weist der Klebstoff Säuren auf, kommen als Säuren vor allem organische Säuren, wie beispielsweise Essigsäure, Weinsäure oder Zitronensäure oder Mischungen davon, in Betracht. Die Säuren können mit besonderem Vorteil zur pH-Einstellung des Klebstoffes verwendet werden. Beispielsweise können mit Hilfe eines sauren Klebstoffes Kalkausblühungen auf Mauern oder Gebäudefassaden oder Kalkablagerungen auf Gegenständen des täglichen Gebrauchs entfernt werden.

Wie bereits erwähnt, kann der Klebstoff ferner Kunststoff- und/oder Naturfasern, beispielsweise Pflanzenfasern, aufweisen. Dadurch lässt sich mit besonderem Vorteil die Reißfestigkeit des verfestigten oder abgebundenen bzw. ausgehärteten Klebstoffs erhöhen. Dadurch lässt sich der Klebstoff zusammen mit den Verunreinigungen leichter als Film von der zu reinigenden Fläche bzw. dem zu reinigenden Gegenstand entfernen.

Mit besonderem Vorteil zeichnet sich der Klebstoff durch eine lange Haltbarkeit aus. In der Regel lässt sich der Klebstoff mindestens ein ½ Jahr lagern bzw. aufbewahren, ohne dass hierdurch seine Klebeeigenschaften beeinträchtigt werden. Bei Lagertemperaturen unterhalb von 10 °C kann der Klebstoff sogar bis zu einem Jahr gelagert bzw. aufbewahrt werden.

Weiterhin kann Klebstoff in einer Auftragsvorrichtung, insbesondere Spritz- oder Sprühvorrichtung, enthalten sein. Bei der Auftragsvorrichtung kann es sich beispielsweise um eine Plastikflasche mit einer geeigneten Austrittsöffnung handeln.

Bezüglich weiterer Merkmale und Einzelheiten zu dem erfindungsgemäß verwendbaren Klebstoff wird auf die EP 1 462 499 A1 verwiesen, deren Offenbarungsgehalt bezüglich des dort beschriebenen Klebstoffes auf Gelatinebasis durch ausdrückliche Bezugnahme zum Inhalt der vorliegenden Beschreibung gemacht wird.

Es wird weiterhin eine Auftragsvorrichtung, insbesondere eine Spritzoder Sprühvorrichtung, die den erfindungsgemäß verwendbaren Klebstoff enthält, beschrieben. Die Auftragsvorrichtung kann Spezialdüsen, beispielsweise Loch- oder Schlitzdüsen, aufweisen. Bezüglich weiterer Einzelheiten und Merkmale wird auf die bisherige Beschreibung Bezug genommen.

Schließlich wird auch ein Reinigungs-Set beschrieben. Das Reinigungs-Set weist zumindest den im Rahmen der vorliegenden Erfindung verwendbaren Klebstoff auf. Das Reinigungs-Set kann neben dem Klebstoff eine geeignete Auftragsvorrichtung für den Klebstoff, beispielsweise eine Plastikflasche, aufweisen. In der Regel ist der Klebstoff in einer Auftragsvorrichtung enthalten. Als weitere Komponenten kann das Reinigungs-Set Spezialdüsen, Spachtel, Pinsel, Walzen und/oder Roller aufweisen. Wie oben erwähnt, kann es sich bei den Spezialdüsen um Lochoder Schlitzdüsen handeln.

Die Erfindung wird nachfolgend unter Bezugnahme auf die beigefügten Figuren näher erläutert.

In den Figuren zeigen schematisch:

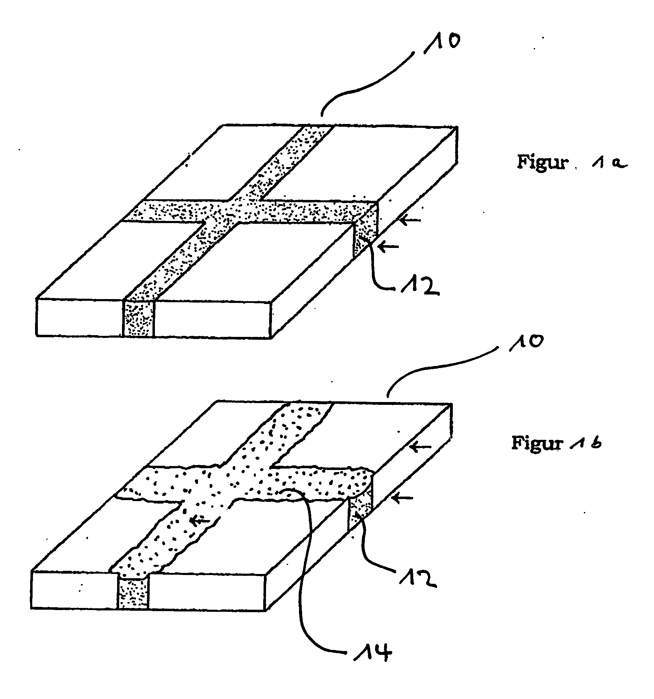

- Fig. 1a: eine Darstellung von Bodenfliesen und -fugen,
- Fig. 1b: eine Darstellung von Bodenfliesen mit nur in den Fugen aufge- tragenem Klebstoff auf der Basis von Gelatine.

### Figurenbeschreibung

In der Fig. 1a ist eine Abbildung aus herkömmlichen Bodenfliesen 10 dargestellt, die mittels Fugen 12 verbunden sind. Zur Reinigung der Fugen 12 wird, wie in Fig. 1b dargestellt ist, ein Klebstoff 14 auf der Basis von Gelatine im Wesentlichen nur in den Fugen 12 aufgetragen. Das Auftragen des Klebstoffes 14 kann dabei mit Hilfe der vorstehend beschriebenen Techniken erfolgen. Der Klebstoff 14 wird in geschmolzenem Zustand auf die Fugen 12 aufgetragen. Während sich der Klebstoff 14 verfestigt, bleiben die in den Fugen 12 vorhandenen Verschmutzungen an dem sich aushärtenden Klebstoff 14 haften. Sobald der Klebstoff 14 eine gewisse Festigkeit erlangt hat, kann er zusammen mit den Verunreinigungen als Film bzw. Belag von den Fugen 12 abgezogen werden. Zurück bleiben gereinigte Fugen 12.

Bei den oben unter Bezugnahme auf die figurenbeschriebenen Ausführungsformen ist es selbstverständlich möglich, nicht nur die Fugenmasse, sondern auch die ganzen Bodenfliesen zusammen mit den Fugen zu reinigen. Hierbei erfolgt der Auftrag des Gelatineklebstoffes großflächig, beispielsweise mit einem Wischer oder einem Pinsel. Das Fugenmaterial kann alle herkömmlich eingesetzten Materialien umfassen, beispielsweise Epoxydharzfugenmassen oder Zementmörtel. Die Reinigungswirkung ist in jedem Fall die gleiche.

### Reinigungsbeispiel

Die Fliesenfugen eines Fliesenbodens wurden mit Hilfe eines unter der Bezeichnung GELMELT® 013 kommerziell erhältlichen GelatineKlebstoffes gereinigt. Hierbei handelt es sich um einen hochviskosen und bei niedrigen Temperaturen schmelzbaren Klebstoff auf Basis von Gelatine, welcher bei Normaltemperatur im wesentlichen gallertartig vorliegt. Der Klebstoff zeichnet sich durch eine hohe Anfangsklebrigkeit und gute Fließeigenschaften aus. Der Klebstoff zeichnet sich weiterhin durch folgende Kenndaten aus:
Refraktometerwert: 58 %
Viskosität: 4300 mPas +/- 500 mPas, gemessen bei einer Auftragstemperatur von 60°C
pH-Wert: 6 bis 7
Gelierpunkt: ca. 37°C bei einer Umgebungstemperatur zwischen 20 und 25°C.

Der Klebstoff GELMELT® 013 wird handelsüblich in Polyethylenbeuteln in Mengen bis zu 2,5 kg verpackt. Zur Vorbereitung des Reinigungsversuches wurde der Kleber daher in eine ca. 100 ml fassende Polyethylenflasche gefüllt, welche anschließend mit einem speziellen Schraubaufsatz verschlossen wurde. Der spezielle Schraubaufsatz zeichnet sich dadurch aus, dass er nicht nur aus einer der Fugenbreite angepassten Austrittsöffnung besteht, sondern zusätzlich eine Kunststofffläche, in der Art eines Spachtels, um die Austrittsöffnung herum aufweist. Durch die Austrittsöffnung ist es möglich, den verflüssigten Klebstoff mengengenau aufzutragen. Während des Auftragens baut sich unter den Kunststoffflächen ein leichter Staudruck auf, wodurch der flüssige Klebstoff in die zu reinigenden Fugen gedrückt werden kann. Dadurch kann der Klebstoff mit besonderem Vorteil eine luftblasenfreie Verbindung mit der Fuge eingehen. Um den Klebstoff auf die Fugen auftragen zu können, wurde der in der Kunststoffflasche befindliche Klebstoff im Wasserbad erwärmt, um ihn von dem gel- bzw. gallertartigen Zustand in den flüssigen Zustand zu überführen. Die Verarbeitungstemperatur von GELMELT ® 013 liegt typischerweise zwischen 40 und 60°C, bevorzugt bei 50°C. Eine Erwärmung über 70°C sollte vermieden werden, da Temperaturen oberhalb von 70°C den Klebstoff schädigen und zu Klebkraftverlusten führen. Nach dem Erwärmen im Wasserbad wurde die Flasche mit dem darin befindlichen flüssigen Klebstoff von Hand gleichmäßig über die zu reinigenden Fugen geführt. Der austretende Klebstoff wurde mittels des oben beschriebenen Auftragskopfes auf die Fliesenfugen aufgetragen. Durch den sich unter den Kunststoffflächen aufbauenden der Fugen gepresst. Der Klebstoff wurde in einer Dicke zwischen 0,4 und 0,5 mm auf die zu reinigenden Fugen aufgetragen. Der aufgetragene Klebstoff kühlte ab und begann unter Ausbildung eines Filmes zu gelieren. Der aufgetragene Klebstoff verlor bereits nach kurzer Zeit wieder seine Klebrigkeit, wodurch die mit dem Klebstoff versehenen Oberflächen bereits nach kurzer Zeit wieder begehbar wurden. Man ließ den aufgetragenen Klebstoff für ca. 2 Stunden bei Umgebungstemperatur trocknen. Der dabei entstandene reißfeste, jedoch noch flexible Film ließ sich zusammen mit den daran anhaftenden Verunreinigungen in einem einzigen Arbeitsgang von zu reinigenden Fugen abziehen. Nach dem Abziehen eventuell verbleibende Klebstoffreste lassen sich problemlos mittels warmen Wassers entfernen. Insgesamt konnte eine deutlich sichtbare Reinigung der Fliesenfugen erzielt werden, ohne diese chemisch oder mechanisch zu schädigen oder anzugreifen. Die Entsorgung von GELTMELT® 013 mit den daran anhaftenden Verunreinigungen kann ohne Bedenken im Hausmüll oder Kompost erfolgen. Gelatineklebstoffe sind nicht nur toxikologisch und physiologisch unbedenklich, sondern auch wasserlöslich und in jeder Kläranlage biologisch vollständig abbaubar.

## Patentansprüche

1. Verfahren zur Reinigung von Flächen oder Gegenständen, umfassend die folgenden Schritte:
a. Auftragen eines schmelzbaren Klebstoffes, umfassend Gelatine und/oder zumindest ein Gelatinederivat und zumindest ein Lösungsmittel, auf eine zu reinigende Fläche bzw. einen zu reinigenden Gegenstand, wobei der Klebstoff vor, bei oder nach dem Auftragen geschmolzen wird,
b. Trocknen des aufgetragenen Klebstoffes unter Ausbildung eines Klebstofffilmes,
c. Entfernen des Klebstofffilmes zusammen mit daran anhaftenden Verunreinigungen von der Fläche bzw. dem Gegenstand.

2. Verfahren nach Anspruch 1, **dadurch gekennzeichnet, dass** der Klebstoff in erwärmtem Zustand, insbesondere bei einer Temperatur zwischen 35 und 70 °C, vorzugsweise 45 und 60 °C, aufgetragen wird.

3. Verfahren nach Anspruch 1 oder 2, **dadurch gekennzeichnet, dass** das Auftragen des Klebstoffs durch Aufspritzen, Aufdüsen, Aufstreichen, Aufwalzen oder Aufsprühen auf die zu reinigende Fläche bzw. den zu reinigenden Gegenstand vorgenommen wird.

4. Verfahren nach einem der vorhergehenden Ansprüche, **dadurch gekennzeichnet, dass** der aufgetragene Klebstoff während eines Zeitraumes zwischen 1 und 8 Stunden, insbesondere 1 und 6 Stunden, vorzugsweise von ca. 2 Stunden, getrocknet wird.

5. Verfahren nach einem der vorhergehenden Ansprüche, **dadurch gekennzeichnet, dass** der Klebstofffilm zusammen mit den daran anhaftenden Verunreinigungen von der zu reinigenden Fläche bzw. dem zu reinigenden Gegenstand abgezogen wird.

6. Verfahren nach einem der vorhergehenden Ansprüche, **dadurch gekennzeichnet, dass** es zur Reinigung von waagrecht angeordneten Flächen, insbesondere Böden, vorzugsweise von Böden aus Fliesen und Fugenmaterialien, und/oder zur Reinigung von senkrechten Flächen, insbesondere Wänden und/oder Mauern, oder von Gebäudefassaden, und/oder zur Reinigung von Kunstgegenständen, insbesondere Skulpturen und/oder Plastiken, verwendet wird.

7. Verwendung eines schmelzbaren Klebstoffes in einem Verfahren nach einem der vorhergehenden Ansprüche, umfassend Gelatine und/oder zumindest ein Gelatinederivat und zumindest ein Lösungsmittel, zu Reinigungszwecken, insbesondere zur Reinigung von Flächen und/oder Gegenständen.

8. Verwendung nach Anspruch 7, **dadurch gekennzeichnet, dass** der Klebstoff einen Erstarrungspunkt unterhalb von 70 °C, insbesondere unterhalb von 50 °C, vorzugsweise unterhalb von 45 °C, aufweist.

9. Verwendung nach Anspruch 7 oder 8, **dadurch gekennzeichnet, dass** der Klebstoff in einem Temperaturbereich zwischen 30 und 80 °C, insbesondere 50 und 70 °C, schmelzbar ist.

10. Verwendung nach einem der Ansprüche 7 bis 9, **dadurch gekennzeichnet, dass** der Klebstoff eine Abbindezeit bzw. Aushärtungszeit zwischen 1 und 6 Stunden, insbesondere 2 und 4 Stunden, aufweist.

11. Verwendung nach einem der Ansprüche 7 bis 10, **dadurch gekennzeichnet, dass** der Klebstoff im geschmolzenem, Zustand eine Viskosität zwischen 3000 und 8000 mPas, vorzugsweise 4000 und 5500 mPas, aufweist.

12. Verwendung nach einem der Ansprüche 7 bis 11, **dadurch gekennzeichnet, dass** der Klebstoff einen Anteil an der Gelatine bzw. an dem Gelatinederivat zwischen 10 und 80 Gew.-%, insbesondere 10 und 60 Gew.-%, bevorzugt 25 und 40 Gew.-%, aufweist, bezogen auf das Gesamtgewicht des Klebstoffes.

## Claims

1. Method for cleaning surfaces or objects comprising the following steps:
a. applying a meltable adhesive, comprising gelatine and/or at least a gelatine derivative and at least one solvent, onto a surface or an object to be cleaned, the adhesive being melted prior to, during or after the application,
b. drying the applied adhesive to form an adhesive film,
c. removing the adhesive film together with the dirt adhering thereto from the surface or the object.

2. Method according to claim 1, **characterized in that** the adhesive is applied in a heated condition, in particular at a temperature comprised between 35 and 70 °C, preferably 45 and 60 °C.

3. Method according to claim 1 or 2, **characterized in that** the adhesive is applied by spraying, jetting, brushing, rolling or sputtering onto the surface to be cleaned or the object to be cleaned.

4. Method according to any of the preceding claims, **characterized in that** the applied adhesive is dried during a period of between 1 and 8 hours, in particular 1 and 6 hours, preferably about 2 hours.

5. Method according to any of the preceding claims, **characterized in that** the adhesive film together with the dirt adhering thereto is stripped from the surface to be cleaned or the object to be cleaned.

6. Method according to any of the preceding claims, **characterized in that** it is employed for cleaning of horizontal surfaces, in particular floors, preferably floors made of tiles and joint material, and/or for cleaning of vertical surfaces, in particular partitions and/or walls, or of faces of buildings, and/or for cleaning of objects of art, in particular sculpture and/or plastic art.

7. Use of a meltable adhesive in a method according to any of the preceding claims, comprising gelatine and/or at least one gelatine derivative and at least one solvent for the purpose of cleaning, in particular cleaning of surfaces and/or objects.

8. Use according to claim 7, **characterized in that** the adhesive has a solidification temperature less than 70 °C, in particular less than 50 °C, preferably less than 45 °C.

9. Use according to claim 7 or 8, **characterized in that** the adhesive is meltable in a temperature range between 30 and 80 °C, in particular 50 and 70 °C.

10. Use according to any of claims 7 to 9, **characterized in that** the adhesive has a setting time or curing time between 1 and 6 hours, in particular 2 and 4 hours.

11. Use according to any of claims 7 to 10, **characterized in that** in a melted condition, the adhesive has a viscosity between 3000 and 8000 mPa·s, preferably 4000 and 5500 mPa·s.

12. Use according to any of claims 7 to 11, **characterized in that** the adhesive includes a proportion of gelatine or gelatine derivative between 10 and 80 % wt., in particular 10 and 60 % wt., preferably 25 and 40 % wt., based on the total weight of the adhesive.

## Revendications

1. Procédé pour le nettoyage de surfaces ou d'objets, comprenant les étapes suivantes :
a. application d'un adhésif fusible, comprenant de la gélatine et/ou au moins un dérivé de gélatine et au moins un solvant, sur une surface à nettoyer ou, selon le cas, un objet à nettoyer, l'adhésif étant fondu avant, pendant ou après l'application,
b. séchage de l'adhésif appliqué avec formation d'un film adhésif,
c. élimination du film adhésif, conjointement avec les impuretés qui y adhèrent, de la surface ou, selon le cas, de l'objet.

2. Procédé selon la revendication 1, **caractérisé en ce que** l'adhésif est appliqué à l'état réchauffé, en particulier à une température entre 35 et 70°C, de préférence entre 45 et 60°C.

3. Procédé selon la revendication 1 ou 2, **caractérisé en ce que** l'application de l'adhésif est réalisée par projection, diffusion, étalement, laminage ou pulvérisation sur la surface à nettoyer ou, selon le cas, l'objet à nettoyer.

4. Procédé selon l'une quelconque des revendications précédentes, **caractérisé en ce que** l'adhésif appliqué est séché pendant un laps de temps compris entre 1 et 8 heures, en particulier entre 1 et 6 heures, de préférence d'environ 2 heures.

5. Procédé selon l'une quelconque des revendications précédentes, **caractérisé en ce que** le film adhésif est retiré, conjointement ensemble avec les impuretés qui y adhèrent, de la surface à nettoyer ou, selon le cas, de l'objet à nettoyer.

6. Procédé selon l'une quelconque des revendications précédentes, **caractérisé en ce qu'**il est utilisé pour le nettoyage de surfaces horizontales, en particulier de sols, de préférence de sols en carrelage et matériaux de rejointoyage, et/ou pour le nettoyage de surfaces verticales, en particulier de parois et/ou de murs, ou de façades de bâtiments, et/ou pour le nettoyage d'objets d'art, en particulier de sculptures et/ou de plastiques.

7. Utilisation d'un adhésif fusible dans un procédé selon l'une quelconque des revendications précédentes, comprenant de la gélatine et/ou au moins un dérivé de gélatine et au moins un solvant, à des fins de nettoyage, en particulier pour le nettoyage de surfaces et/ou d'objets.

8. Utilisation selon la revendication 7, **caractérisée en ce que** l'adhésif présente un point de solidification inférieur à 70°C, en particulier inférieur à 50°C, de préférence inférieur à 45°C.

9. Utilisation selon la revendication 7 ou 8, **caractérisée en ce que** l'adhésif est fusible dans une plage de température entre 30 et 80°C, en particulier entre 50 et 70°C.

10. Utilisation selon l'une quelconque des revendications 7 à 9, **caractérisée en ce que** l'adhésif présente un temps de prise ou, selon le cas, de durcissement compris entre 1 et 6 heures, en particulier entre 2 et 4 heures.

11. Utilisation selon l'une quelconque des revendications 7 à 10, **caractérisée en ce que** l'adhésif présente, à l'état fondu, une viscosité entre 3000 et 8000 mPa.s, de préférence entre 4000 et 5500 mPa.s.

12. Utilisation selon l'une quelconque des revendications 7 à 11, **caractérisée en ce que** l'adhésif présente une proportion de gélatine ou, selon le cas, de dérivé de gélatine comprise entre 10 et 80% en poids, en particulier entre 10 et 60% en poids, de préférence entre 25 et 40% en poids, par rapport au poids total de l'adhésif.
